## Europäisches Patentamt
## European Patent Office
## Office européen des brevets

(11) Publication number: **0 084 719**
**B1**

(12) **EUROPEAN PATENT SPECIFICATION**

(45) Date of publication of patent specification: **07.08.85**

(21) Application number: **82306739.2**

(22) Date of filing: **16.12.82**

(51) Int. Cl.⁴: **B 60 T 11/34**

(54) **Brake pressure proportioning valve.**

(30) Priority: **19.01.82 GB 8201483**

(43) Date of publication of application:
**03.08.83 Bulletin 83/31**

(45) Publication of the grant of the patent:
**07.08.85 Bulletin 85/32**

(84) Designated Contracting States:
**DE FR IT**

(56) References cited:
**GB-A-1 455 826**
**GB-A-2 004 961**
**GB-A-2 028 444**
**GB-A-2 051 989**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Bailey, Walter William**
**5 Erica Drive**
**Whitnash Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

The invention relates to brake pressure proportioning valves and particularly to valves which can be described as "failure sensitive".

It is known from GB—A—1 455 826 to provide a failure sensitive brake pressure proportioning valve comprising a housing, a primary inlet port for connection to a driver-controlled source in one sub-system of a split braking system, a secondary inlet port for connection to a driver-controlled source in another sub-system of the split braking system, an outlet port for connection to a brake in said one sub-system, a primary plunger having a relatively small diameter portion which defines a piston area subject to pressure at the primary inlet port and having a relatively large diameter portion which defines a piston area subject to pressure at the outlet port, metering valve means associated with the primary plunger for controlling flow between the primary inlet port and the outlet port such that pressure at the outlet port acts to move the primary plunger to close the metering valve means and pressure at the primary inlet port acts to move the primary plunger to open the metering valve means, and a stepped annular secondary plunger concentric with the primary plunger and defining an annular piston area subject to pressure at the secondary inlet port such that said pressure acts to oppose the load of a biassing spring, which load acts on the primary plunger in the direction to open the metering valve means. The failure sensitive nature of a valve of the kind described above arises from its operation when there is partial failure of the braking system and no pressure is available at the secondary outlet port. In normal operation pressures at the inlet ports and outlet port rise together until a predetermined pressure is attained whereupon the primary plunger moves to allow the outlet port pressure to rise only at a reduced rate compared with inlet port pressure. In the partial failure mode pressure at the outlet port continues to rise beyond the predetermined pressure.

The known valve operates satisfactorily but is expensive to manufacture and requires careful adjustment. It is thus an object of the invention to provide a brake pressure proportioning valve of the kind described which is inexpensive and does not require careful adjustment.

According to the present invention there is provided a brake pressure proportioning valve of the kind described above wherein the secondary plunger is arranged between the relatively large and small diameter portions of the primary plunger.

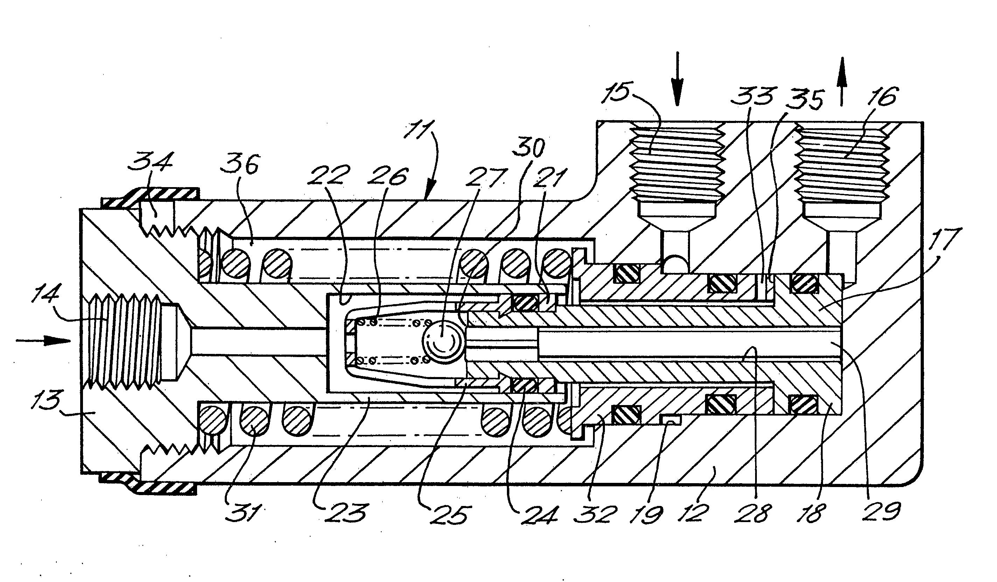

One embodiment of the invention will now be described by way of example and with reference to the accompanying drawing shows a cross-section of a valve according to the invention.

In the drawing working seals are shown conventionally and will not normally be referred to specifically. The valve comprises a housing 11 having two housing components 12 and 13 screw-threaded together. Housing component 13 has a primary inlet port 14 for connection to a driver-controlled source in one sub-system of a split braking system, e.g. one outlet port of a tandem master cylinder. A secondary inlet port 15 in the housing component 12 is for connection to another sub-system of the split braking system, e.g. another outlet port of the tandem master cylinder. An outlet port 16 in the housing component 12 is for connection to a rear brake of a vehicle to which the braking system is fitted.

A primary plunger 17 has a relatively large diameter portion 18 which is slidable in the smaller diameter portion of a stepped bore 19 in housing component 12 and a relatively small diameter portion formed by a collar 21 on the main body portion of the primary plunger 17. The collar 21 is slidable in the bore 22 of a tubular housing portion 23 of housing component 13.

The collar 21 flanks one side of a seal 24 which is flanked on the other side by a flange on a snap-on cage 25 which retains a valve seating spring 26 and a metering valve member in the form of a ball 27. The ball 27 is, as shown in the drawing, held spaced from a valve seat 30 formed by the adjacent end of an axial passage 28 in the primary plunger 17 by a pin 29 which extends through the passage 28 and abuts the housing component 12 at one end and the ball 27 at the other. Pin 29 includes a square section portion adjacent the ball 27 to permit guidance whilst allowing communication between the primary inlet port 14 and the outlet port 16.

The primary plunger 17 is biassed into the position shown by a biassing spring 31 whose load is transmitted through an annular stepped secondary plunger 32 slidable in the stepped bore 19 and concentric with the primary plunger 17. Thus the secondary plunger 32 is interposed between the biassing spring 31 and an abutment face 35 on the primary plunger 17. This ensures that the secondary plunger 32 is always moved with the primary plunger 17 so undetected seizing cannot occur.

The secondary plunger 32 defines an annular piston area formed by the difference in cross-sectional area of the stepped bore 19 so that pressure at the secondary inlet port 15 acts to oppose the load of the biassing spring 31.

Plunger portion 18 defines a piston area subject to pressure at the outlet port 16 and the collar 21 defines a piston area subject to pressure at the primary inlet port 14. When both subsystems of the braking system are working normally the pressures at inlet ports 14 and 15 rise substantially equally and, with the ball 27 unseated by the pin 29, the outlet port pressure induces force imbalance on the primary plunger 17 due to the difference in piston areas, creating a force which is resisted by the secondary plunger 32. In addition there is pressure induced force imbalance on the secondary plunger 32 which adds to the force from the primary plunger 17 in opposing the load of the biassing spring 31. When the sum of the pressure induced forces matches the biassing spring load the plungers 17 and 32 move to allow ball 27 to seat and block the axial passage 28. This occurs at a predetermined master cylinder pressure. Thereafter with rising inlet port pressures the outlet port pressure increases at a reduced rate, the metering valve means comprising ball 27 and the seat formed by the end of passage 28 opening and closing as the plungers move to and fro in a known manner to maintain the balance of forces.

If the sub-system serving the secondary inlet port 15 fails, the pressure induced force imbalance on the secondary plunger 32 ceases. Hence primary inlet port pressure will rise beyond the predetermined master cylinder pressure to allow pressure at the outlet port 16 to increase at the same rate. Eventually the pressure induced force imbalance on the primary plunger 17 will overcome the biassing spring load but this will only occur at a pressure considerably higher than said predetermined pressure.

The secondary plunger 32 is arranged between the relatively large and small diameter portions 18 and 21 of the primary plunger 17 and this allows a construction whereby housing portion 12 has only one stepped bore 19 which need only be machined from one end. This creates small tolerance accumulations and obviates a need for adjustment of the fitted length of the biassing spring 31 to set the preload.

By arranging the biassing spring 31 to encircle the tubular housing portion 23 the valve is made compact. So that seal failures can be visibly detected a radial drilling 33 in the secondary plunger 32 vents the stepped bore between the adjacent seals of the two plungers 17 and 32 (seals being shown conventionally in the drawing). A slot 34 in the end face of housing component 12 vents the chamber 36 occupied by the biassing spring 31.

## Claims

1. A brake pressure proportioning valve comprising a housing (11), a primary inlet port (14) for connection to a driver-controlled source in one sub-system of a split braking system, a secondary inlet port (15) for connection to a driver-controlled source in another sub-system of the split braking system, an outlet port (16) for connection to a brake in said one sub-system, a primary plunger (17) having a relatively small diameter portion (21) which defines a piston area subject to pressure at the primary inlet port and having a relative large diameter portion (18) which defines a piston area subject to pressure at the outlet port, metering valve means (27) associated with the primary plunger for controlling flow between the primary inlet port and the outlet port such that pressure at the outlet port acts to move the primary plunger to close the metering valve means and pressure at the primary inlet port acts to move the primary plunger to open the metering valve means, and a stepped annular secondary plunger (32) concentric with the primary plunger and defining an annular piston area subject to pressure at the secondary inlet port such that said pressure acts to oppose the load of a biassing spring (31), which load acts on the primary plunger in the direction to open the metering valve means, characterised in that the secondary plunger is arranged between said large and small diameter portions (18 and 21) of the primary plunger (17).

2. A valve according to Claim 1, characterised in that the secondary plunger (32) is interposed between the biassing spring (31) and an abutment face (35) of the primary plunger (17) such that the load of the biassing spring is transmitted through the secondary plunger.

3. A valve according to Claim 1 or Claim 2, characterised in that the relatively small diameter plunger portion (21) is slidable in the bore (22) of a tubular housing portion (23) which is encircled by the biassing spring (31).

4. A valve according to any preceding claim, characterised in that the metering valve means comprises a metering valve member (27) which co-operates with a valve seat (30) formed in an axial passage (28) in the primary plunger (17) and a pin (29) which extends through the axial passage to abut the housing (11) at one end and the metering valve member at the other end.

5. A valve according to any preceding claim, characterised in that the relative small diameter plunger portion is formed by a collar (21) on a main body portion of the primary plunger.

### Patentansprüche

1. Bremsdruckbemessungsventil mit einem Gehäuse (11), einer Haupteinlaßöffnung (14) zur Verbindung mit einer fahrergesteuerten Quelle in einem Teilsystem eines geteilten Bremssystems, einer Nebeneinlaßöffnung (15) zur Verbindung mit einer fahrergesteuerten Quelle in einem anderen Teilsystem des geteilten Bremssystems, einer Auslaßöffnung (16) zur Verbindung mit einer Bremse in dem einen Teilsystem, einem Hauptkolben (17), der einen im Durchmesser relativ kleinen Teil (21) hat, der eine Kolbenfläche bildet, die dem Druck an der Haupteinlaßöffnung ausgesetzt ist, und einen im Durchmesser relativ großen Teil (18) hat, der eine Kolbenfläche bildet, die dem Druck an der Auslaßöffnung ausgesetzt ist, einer dem Hauptkolben zugeordneten Bemessungsventileinrichtung (27) zum Steuern des Stromes zwischen der Haupteinlaßöffnung und der Auslaßöffnung, derart, daß durch den Druck an der Auslaßöffnung der Hauptkolben bewegt wird, um die Bemessungsventileinrichtung zu schließen, und durch den Druck an der Haupteinlaßöffnung der Hauptkolben bewegt wird, um die Bemessungsventileinrichtung zu öffnen, und einem abgestuften ringförmigen Hilfskolben (32), der konzentrisch zu dem Hauptkolben ist und eine ringförmige Kolbenfläche bildet, die dem Druck an der Nebeneinlaßöffnung ausgesetzt ist, derart, daß durch den Druck der Kraft einer Vorspannfeder (31) entgegengewirkt wird, welche Kraft auf den Hauptkolben in der Richtung zum Öffnen der Bemessungsventileinrichtung wirkt, dadurch gekennzeichnet, daß der Hilfskolben zwischen dem im Durchmesser großen und dem im Durchmesser kleinen Teil (18 und 21) des Hauptkolbens (17) angeordnet ist.

2. Ventil nach Anspruch 1, dadurch gekennzeichnet, daß der Hilfskolben (32) zwischen der Vorspannfeder (31) und einer Anschlagfläche (35) des Hauptkolbens (17) angeordnet ist, derart, daß die Kraft der Vorspannfeder durch den Hilfskolben hindurch übertragen wird.

3. Ventil nach Anspruch 1 oder Anspruch 2, dadurch gekennzeichnet, daß der im Durchmesser relativ kleine Kolbenteil (21) in der Bohrung (22) eines rohrförmigen Gehäuseteiles (23) gleitbar ist, das von der Vorspannfeder (31) umgeben ist.

4. Ventil nach irgendeinem vorhergehenden Anspruch, dadurch gekennzeichnet, daß die Bemessungsventileinrichtung ein Bemessungsventilglied (27) aufweist, das mit einem Ventilsitz (30) zusammenarbeitet, der in einem Axialdurchgang (28) in dem Hauptkolben (17) gebildet ist, und einen Stift (29) aufweist, der durch den Axialdurchgang hindurch verläuft, um sich an dem Gehäuse (11) an einem Ende und an dem Bemessungsventilglied an dem anderen Ende abzustützen.

5. Ventil nach irgendeinem vorhergehenden Anspruch, dadurch gekennzeichnet, daß der im Durchmesser relativ kleine Kolbenteil durch einen Bund (21) an einem Hauptkörperteil des Hauptkolbens gebildet ist.

**Revendications**

1. Distributeur de proportionnement de la pression de freinage, comprenant un boîtier (11), un orifice d'entrée principale (14) destiné à être raccordé à une source commandée par un conducteur comprise dans un premier circuit appartenant à un système de freinage à plusieurs circuits, un orifice d'entrée secondaire (15) destiné à être raccordé à une source commandée par le conducteur comprise dans un autre circuit appartenant au système de freinage à plusieurs circuits, un orifice de sortie (16) destiné à être raccordé à un frein compris dans le premier circuit, un plongeur principal (17) ayant une partie (21) de diamètre relativement petit, qui délimite une surface de piston soumise à l'action de la pression régnant à l'orifice d'entrée principale et une partie (18) de diamètre relativement grand qui délimite une surface de piston soumise à l'action de la pression régnant à l'orifice de sortie, des moyens (27) formant clapet de dosage, associés au plongeur principal pour commander l'écoulement entre l'orifice d'entrée principale et l'orifice de sortie de telle manière que la pression régnant à l'orifice de sortie tend à déplacer le plongeur principal dans le sens qui ferme les moyens formant clapet de dosage et que la pression régnant à l'orifice d'entrée principale tend à déplacer le plongeur principal dans le sens tendant à ouvrir les moyens formant clapet de dosage, et un plongeur secondaire annulaire à gradins (32), coaxial au plongeur principal et délimitant une surface de piston annulaire soumise à l'action de la pression régnant à l'orifice d'entrée secondaire de telle manière que ladite pression tend à s'opposer à la charge exercée par un ressort de sollicitation (31), laquelle charge agit sur le plongeur principal dans le sens tendant à ouvrir les moyens formant clapet de dosage, caractérisé en ce que le plongeur secondair est disposé entre lesdites parties de grand diamètre et de petit diamètre (18 et 21) du plongeur principal (17).

2. Distributeur selon la revendication 1, caractérisé en ce que le plongeur secondaire (32) est interposé entre le ressort de sollicitation (31) et une face de butée (35) du plongeur principal (17) de telle manière que la charge exercée par le ressort de sollicitation soit transmise à travers le plongeur secondaire.

3. Distributeur selon l'une des revendications 1 et 2, caractérisé en ce que la partie (21) de diamètre relativement petit du plongeur est montée à coulissement dans l'alésage (22) d'une partie formant logement tubulaire (23) du boîtier qui est encerclée par le ressort de sollicitation (31).

4. Distributeur selon l'une quelconque des revendications précédentes, caractérisé en ce que les moyens formant clapet de dosage comprennent un élément de clapet de dosage (27) qui coopère avec un siège de clapet (30) formé dans un passage axial (28) ménagé dans le plongeur principal (17) et une tige (29) qui passe dans le passage axial pour buter contre le corps (11) à une extrémité et contre l'élément de clapet de dosage à l'autre extrémité.

5. Distributeur selon l'une quelconque des revendications précédentes, caractérisé en ce que la partie de diamètre relativement petit du plongeur est formée par une bague (21) montée sur la partie corps principal du plongeur principal.